# EUROPÄISCHE PATENTSCHRIFT

(11) **EP 3 054 727 B1**
(45) Veröffentlichungstag und Bekanntmachung des Hinweises auf die Patenterteilung: **04.01.2017**
(21) Anmeldenummer: 15183641.8
(22) Anmeldetag: 03.09.2015
(51) Int. Cl.: H04W 40/24, H04W 74/08, H04L 12/707

(54) **VERFAHREN ZUM ÜBERMITTELN VON EMPFANGSBESTÄTIGUNGEN BEI BROAD- ODER MULTICAST-KOMMUNIKATION**
METHOD FOR TRANSMITTING RECEPTION CONFIRMATIONS IN BROAD OR MULTICAST COMMUNICATION
PROCEDE DE TRANSMISSION D'ACCUSES DE RECEPTION POUR LA COMMUNICATION DE MULTIDIFFUSION OU DE DIFFUSION

(30) Priorität: 06.02.2015 DE 102015101701
(43) Veröffentlichungstag der Anmeldung: 10.08.2016
(73) Patentinhaber: Insta Elektro GmbH, 58509 Lüdenscheid (DE)
(72) Erfinder: Neuhaus, Stefan, 44287 Dortmund (DE); Groll, Roland, 58507 Lüdenscheid (DE); Frey, Hannes, 56077 Koblenz (DE); Funke, Rafael, 56068 Koblenz (DE)

(56) Entgegenhaltungen:
- US-A1- 2014 365 435
- YI DUAN ET AL: "Dynamic Data Forwarding in Low-Duty-Cycle Sensor Networks", PARALLEL AND DISTRIBUTED SYSTEMS (ICPADS), 2011 IEEE 17TH INTERNATIONAL CONFERENCE ON, IEEE, 7. Dezember 2011 (2011-12-07), Seiten 505-511, XP032087316, DOI: 10.1109/ICPADS.2011.53 ISBN: 978-1-4577-1875-5
- ROY (EDITOR) CISCO SYSTEMS M CHANDRA (EDITOR) A: "Extensions to OSPF to Support Mobile Ad Hoc Networking; draft-ietf-ospf-manet-or-03.txt", EXTENSIONS TO OSPF TO SUPPORT MOBILE AD HOC NETWORKING; DRAFT-IETF-OSPF-MANET-OR-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, Nr. 3, 11. Januar 2010 (2010-01-11), Seiten 1-35, XP015066226, [gefunden am 2010-01-11]

## Beschreibung

Die Erfindung betrifft ein Verfahren zum Übermitteln von Empfangsbestätigungen bei einer Broad- oder Multicast-Kommunikation in einem, insbesondere drahtlosen Multi-Hop-Netz, bei welchem Verfahren von jedem Netzteilnehmer nach Erhalt einer Kommunikation nach Ablauf einer zufällig gewählten Verzögerungszeit eine Empfangsbestätigung gesendet wird.

In Multi-Hop-Netzen kann von jedem Netzteilnehmer ein Datenpaket als Nachricht oder Befehl in Abhängigkeit von dem oder den gewünschten Empfängern als Unicast-, Multicast-, oder Broadcast-Kommunikation gesendet werden. Netzteilnehmer werden mitunter auch als Knoten bezeichnet. Zum Überprüfen, ob die Kommunikation erfolgreich war, sendet jeder durch eine solche Kommunikation angesprochene Netzteilnehmer eine Empfangsbestätigung, die der die Kommunikation sendende Netzteilnehmer empfangen soll. Bei einer Broadcast-Kommunikation, durch die somit alle Netzteilnehmer angesprochen sind, müssen zur Bestätigung des Erhaltes der Kommunikation sämtliche Netzteilnehmer eine Empfangsbestätigung absetzen, die über das Netz dem sendenden Netzteilnehmer zugeführt wird. Bei einer Multicast-Kommunikation senden nur die durch die Kommunikation angesprochenen Netzteilnehmer eine Empfangsbestätigung. Bei Multi-Hop-Netzen kann die Datenpaketübermittlung durch Weitergabe der von einem Netzteilnehmer empfangenen Datenpakete an alle seine Nachbarn erfolgen. Dabei ist vorgesehen, dass jeder Netzteilnehmer ein empfangenes Datenpaket nur einmal weiterleitet. Während dieses bei dem Verbreiten eines Datenpaketes durch Broadcast (gleiches gilt für Multicast) unproblematisch ist, da die Kommunikation von einem einzigen Netzteilnehmer ausgeht, kann vor allem bei Netzen mit einer größeren Anzahl an Netzteilnehmern die Weiterleitung der von jedem Netzteilnehmer gesendeten Empfangsbestätigung zu Problemen, insbesondere zu einer Überlastung der Netzkommunikation führen. Diese Problematik tritt vor allem bei drahtlos betriebenen Multi-Hop-Netzen aufgrund der begrenzten Übermittlungskapazität auf.

Eine gewisse Entzerrung im Senden der Empfangsbestätigungen der einzelnen Netzteilnehmer versucht man dadurch zu erreichen, dass die Netzteilnehmer ihre Empfangsbestätigung zu möglichst unterschiedlichen Zeiten senden. In Infrastruktur-Netzen kann hierfür jedem Netzteilnehmer beispielsweise ein Zeitslot zugewiesen werden, wie etwa im Rahmen eines Time Division Multiple Access (TDMA). Bei infrastrukturlosen Multihop-Netzen ist dies aber nicht ohne weiteres möglich. Dort ist es zweckmäßiger, dass Netzteilnehmer mit zufällig gewählten Verzögerungszeiten zur Kollisionsauflösung arbeiten. Hierfür kann ein Carrier Sense Multiple Access (CSMA) verwendet werden. Zu diesem Zweck kann mit dem Empfang eines einem Broadcast oder Multicast zugehörigen Datenpakets ein Timer mit einer zufällig ausgewählten Verzögerungszeit gesetzt werden, um die Empfangsbestätigung erst nach Ablauf der Verzögerungszeit zu senden. Erreicht wird hierdurch, dass die einzelnen Netzteilnehmer ihre Empfangsbestätigung nicht gleichzeitig senden, wobei die Abstände in den zufällig gewählten Verzögerungszeiten voneinander so gewählt sind, dass zwischen dem Senden einer ersten Empfangsbestätigung und einer darauf folgenden im Erwartungswert eine hinreichende Zeitspanne ist, damit die Empfangsbestätigung des zuerst sendenden Teilnehmers an den die Kommunikation auslösenden Teilnehmer übermittelt worden ist. Bei Netzen mit einer größeren Anzahl an Netzteilnehmern ist ein solches Verfahren nicht praktikabel, da die Reaktionszeit, bis ein eine Kommunikation sendender Teilnehmer die Bestätigung von allen durch die Kommunikation angesprochenen Netzteilnehmern erhalten hätte, zu lang wäre.

Aus IEEE 2011, 17th International Conference on Parallel and Distributed Systems ist in dem Aufsatz Dynamic Data Forwarding in Low-Duty-Cycle Sensor Networks ein Verfahren zum Übermitteln von Daten in einem Multi-Hop-Netz, wobei ein Betrieb des Netzes mit möglichst wenig Energie erfolgen soll. Das aus diesem Stand der Technik bekannte Verfahren ist somit auf einen energiesparenden Betrieb des Netzwerkes gerichtet und nimmt mitunter eine längere Signallaufzeit in Kauf. Bei diesem Verfahren wird ein Datenpaket von einem Ursprungsknoten nicht via Broadcast, sondern über bevorzugte Knoten (*Candidate nodes*) gesendet. Diese befinden sich in der Nachbarschaft zu dem Ursprungsknoten. Ausgewählt wird für eine Datenübermittlung derjenige *Candidate node* der eine besonders gute Verbindung mit dem Ursprungsknoten im Bezug auf die Verbindungsqualität hat. Zur Auswahl und Bestimmung der *Candidate nodes* verfügen die Knoten über eine Nachbarschaftstabelle mit einer Information zu der Qualität der Verbindung zu dem jeweiligen Nachbarknoten. Da die Kommunikation drahtlos erfolgt, kann die Funkverbindungsqualität zwischen benachbarten Knoten sich ändern. Demnach sendet ein erster Knoten ein so genanntes *Neighbour Discovery Packet* an seine Nachbarn. Teil des Datenpaketes ist ein *hop-count-*Wert. Dieser gibt an, wie viele Übermittlungen dieses Paket von dem ersten Knoten bis zum Nachbarknoten notwendig waren. Die Nachbarknoten vergleichen den *hop-count-*Wert in dem empfangenen Datenpaket mit dem in ihrer Nachbarschaftstabelle gespeicherten. Auf diese Weise werden sich ändernde Übertragungsbedingungen berücksichtigt, da regelmäßig in der Nachbarschaftstabelle die Übermittlungsstrecke mit den kleinsten *hop-count-*Werten eingetragen ist. Um eine Kollision im Netz zu vermeiden schicken die Nachbarschaftsknoten eine Empfangsbestätigung an den Ursprungsknoten mit dem aktuellen *hop-count-*Wert.

Ausgehend von diesem diskutierten Stand der Technik liegt der Erfindung die Aufgabe zugrunde, ein Verfahren der eingangs genannten Art dergestalt weiterzubilden, dass auch mit den in einem drahtlos, insbesondere auch infrastrukturlos betriebenen Multi-Hop-Netz zur Verfügung stehenden Ressourcen eine sichere Empfangsbestätigung durch die Kommunikation angesprochenen Netzteilnehmer bei einer Broadcast- oder einer Multicast-Kommunikation in akzeptabler Zeit und ohne drohende Netzüberlastung durchgeführt werden kann.

Gelöst wird diese Aufgabe erfindungsgemäß durch ein eingangs genanntes, gattungsgemäßes Verfahren ausgeführt in Anspruch 1.

Eine Absenderinformation bezeichnet im Rahmen dieser Ausführungen die Menge von einer oder mehreren Teilnehmeradressen, die den Empfang bestätigt haben.

Bei diesem Verfahren ist vorgesehen, dass jeder durch eine Kommunikation angesprochene Netzteilnehmer nach einer zufällig gewählten Verzögerungszeit eine Empfangsbestätigung sendet, die zumindest die eigene Absenderinformation beinhaltet. Sollte das Netz auch Netzteilnehmer umfassen, die aufgrund eines sehr energiesparend arbeitenden Modus keine Empfangsbestätigung senden, arbeiten diese nicht nach dem im Rahmen dieser Ausführungen beschriebenen Verfahren. Insofern bezieht sich das Verfahren nur auf solche Netzteilnehmer, die ausgelegt sind, nach Erhalt einer Kommunikation eine Empfangsbestätigung zu senden. Aufgrund des zeitlich zueinander versetzten Sendens der Empfangsbestätigung durch die Netzteilnehmer wird tatsächlich nur einer oder es werden nur wenige Netzteilnehmer als Empfangsbestätigung ausschließlich ihre eigene Absenderinformation senden. Vielmehr ist bei diesem Konzept vorgesehen, dass jeder Netzteilnehmer, der in der Zeitspanne der laufenden Verzögerungszeit eine Empfangsbestätigung eines anderen Netzteilnehmers erhält, seinen Empfangsbestätigungsabsenderspeicher daraufhin überprüft, ob eine in der empfangenen Empfangsbestätigung enthaltene Absenderinformation darin bereits abgelegt ist. Insofern akkumuliert ein Netzteilnehmer in der laufenden Verzögerungszeit zum Senden seiner eigenen Empfangsbestätigung die Empfangsbestätigungen, die er von benachbarten Netzteilnehmern erhält mit den darin enthaltenen Absenderinformationen. Wird bei dieser Überprüfung festgestellt, dass der eine solche Empfangsbestätigung empfangende Netzteilnehmer eine darin enthaltene Absenderinformation noch nicht kennt, wird der Timer mit einer neuen zufällig gewählten Verzögerungszeit gesetzt. Typischerweise wird jeder in Frage kommende Netzteilnehmer über einen einzigen Timer verfügen. Das Setzen der neuen, zufällig gewählten Verzögerungszeit erfolgt etwa durch Verwerfen der laufenden Verzögerungszeit und erneutes Starten des Timers mit der neuen Verzögerungszeit. Durchaus ist es auch möglich, eine laufende Verzögerungszeit zu stoppen und um die neue Verzögerungszeit zu verlängern. Ist die neue Verzögerungszeit abgelaufen, wird die Empfangsbestätigung von diesem Netzteilnehmer gesendet. Die dann gesendete Empfangsbestätigung umfasst nicht nur die eigene Absenderinformation, sondern auch die in seinem Empfangsbestätigungsabsenderspeicher abgelegte Absenderinformation anderer Netzteilnehmer. Auf diese Weise erfolgt somit eine zunehmende Aggregation der Absenderinformation von Netzteilnehmern, die den Empfang der zuvor gesendeten Kommunikation bestätigt haben.

Empfängt ein Netzteilnehmer hingegen eine Empfangsbestätigung mit Absenderinformation, die ihm bereits bekannt ist, wird kein Timer gesetzt und demzufolge das empfangene Datenpaket nicht weitergeleitet. Hierin ist die erhebliche Reduzierung der im Rahmen der Empfangsbestätigungen durch das Multi-Hop-Netz zu übermittelnden Datenpaketen begründet. Ausgenutzt wird bei diesem Konzept, dass die Netzkommunikation nicht durch Datenpakete mit mehr Inhalt, sondern v. a. durch die Anzahl der zu übermittelnden Datenpakete begrenzt ist.

Ein Netzteilnehmer sendet nur dann eine weitere Empfangsbestätigung, wenn nach Senden einer ersten Empfangsbestätigung von diesem Netzteilnehmer eine Empfangsbestätigung empfangen wird, die eine neue, bisher von ihm noch nicht registrierte Absenderinformation enthält. Ist dieses der Fall, werden die vorbeschriebenen Schritte bis zum Senden einer weiteren Empfangsbestätigung wiederholt.

Die Vorteile dieses Konzeptes liegen, wie bereits angedeutet, in der signifikant reduzierten Anzahl an zu übermittelnden Empfangsbestätigungen.

Der Vorteil dieses Verfahrens macht sich vor allem bei Netzen mit einer größeren Anzahl an Netzteilnehmern bemerkbar. Aus diesem Grunde eignet sich dieses Verfahren vor allem für einen Einsatz in Multi-Hop-Netzen mit einer größeren Netzteilnehmeranzahl, die durchaus auch mehrere hundert Teilnehmer umfassen können.

Als Empfangsbestätigungsabsenderspeicher ist gemäß einer Ausgestaltung der Erfindung vorgesehen, dass die Netzteilnehmer hierfür die Adressinformationen im Arbeitsspeicher in einer Tabelle ablegen. Diese Tabelle kann als Cache mit einer begrenzten Anzahl an Tabellenzeilen realisiert werden, damit auch in großen Netzen mit vielen Netzteilnehmern der Speicherverbrauch in ressourcenbegrenzten Geräten angemessen skalierbar ist.

Gemäß einer zweckmäßigen Weiterbildung ist vorgesehen, dass Datenpakete mit einer größeren Anzahl an Adressinformation priorisiert gegenüber Datenpaketen gesendet werden, die eine geringere Anzahl an Adressinformationen beinhalten. Um dieses zu erreichen, kann, was in einem Ausführungsbeispiel vorgesehen ist, die zufällig gewählte Verzögerungszeit umso kürzer gewählt werden, je größer die Anzahl der im Empfangsbestätigungsabsenderspeicher abgelegten Absender bzw. Absenderinformation ist. Vorgenommen werden kann dieses etwa durch eine einfache Rechenoperation, namentlich einer Division, bei der die zufällig gewählte Verzögerungszeit durch die in dem Empfangsbestätigungsabsenderspeicher abgelegte Anzahl an Absenderinformation geteilt wird. Je größer die Anzahl der abgelegten Absenderinformation in einem solchen Speicher ist, desto größer ist der Divisor mit dem Ergebnis, dass die daraus resultierende Verzögerungszeit entsprechend kürzer ist. Dieser Verfahrensschritt kann standardmäßig vorgenommen werden, da hierdurch die nach Empfang einer Kommunikation gestartete erste Verzögerungszeit nicht verkürzt wird, da im Empfangsbestätigungsabsenderspeicher nur die eigene Absenderinformation enthalten ist. Die Priorisierung in der Übermittlung von Datenpaketen mit einer größeren Anzahl an Adressinformation führt automatisch zur Auslöschung von Empfangsbestätigungen mit nur einer geringeren Anzahl an Adressinformation, da diese nach Empfangen der priorisierten Empfangsbestätigung obsolet sind. Hierdurch wird die Anzahl der zu übermittelnden Empfangsbestätigungen über mehrere Netzteilnehmer hinweg nochmals deutlich reduziert.

Je nach Ausgestaltung der Netzteilnehmer, wobei diese hinsichtlich ihrer Speicherkapazitäten nicht alle gleich ausgerüstet sein müssen, kann für Netzteilnehmer mit nur einer geringeren Speicherkapazität vorgesehen sein, dass unabhängig von einer laufenden Verzögerungszeit eine Empfangsbestätigung gesendet wird, wenn die in seinem Empfangsbestätigungsabsenderspeicher die zum Speichern von Adressinformation freigehaltenen Speicherplätze belegt sind.

Gemäß einer alternativen Ausgestaltung zum Ablegen von Adressinformation ist die Verwendung einer Bitmaske vorgesehen. Bei diesem Ansatz wird vorausgesetzt, dass alle Netzteilnehmer hinreichend Speicherkapazität in ihrem Empfangsbestätigungsabsenderspeicher haben, um diese darin speichern zu können. Die Bitmaske ist hinreichend groß bzw. lang, um darin die Absenderinformation aller Netzteilnehmer abzubilden. Typischerweise weist die Bitmaske eine Länge auf, die der Anzahl der Netzteilnehmer des Multi-Hop-Netzes entspricht. Typischerweise ist bei einer solchen Bitmaske jeder Netzteilnehmer durch ein spezifisches Bit repräsentiert. Die Zuordnung der Netzteilnehmer zu Bits erfordert eine eindeutige Nummerierung dieser zwischen 0 und maximaler Anzahl Knoten - 1. Die Adressinformation eines Netzteilnehmers ist durch die Stellung dieses Bits in "0" oder "1" niedergelegt. Bei einer Ausgestaltung, bei der die Stellung "1" das Vorhandensein einer Empfangsbestätigung dieses Netzteilnehmers bedeutet, ist die Ursprungsbitmaske in jedem Netzteilnehmer bezüglich der eigenen Adressinformation auf dem jeweiligen Bit entsprechend vorkodiert und damit in der Stellung "1". Alle anderen Bits sind auf "0" gestellt. Empfängt ein Netzteilnehmer eine Empfangsbestätigung, die von einem anderen Netzteilnehmer gesendet worden ist, werden die beiden Bitmasken - die im empfangenden Netzteilnehmer vorhandene und die empfangene - bezüglich der in den beiden Bitmasken enthaltenen Absenderinformation durch Oder-Verknüpfung miteinander aggregiert, so dass die diesbezüglich aktualisierte Bitmaske in dem Netzteilnehmer die kumulierte Absenderinformation aus beiden Bitmasken enthält. Bei diesem Vorgang werden in der im empfangenden Netzteilnehmer vorhandenen Bitmaske diejenigen Bits in die Stellung "1" gebracht, die in der empfangenen Bitmaske diese Stellung haben, jedoch in der eigenen Bitmaske noch auf "0" gestellt sind. Auf diese Weise kann zugleich detektiert werden, ob eine Änderung in der beim empfangenden Netzteilnehmer vorhandenen Bitmaske vorgenommen worden ist oder nicht. Wird in diese Bitmaske eine neue Absenderinformation durch Umstellen eines oder mehrerer Bits in die Stellung "1" vorgenommen, wird eine neue zufällig gewählte Verzögerungszeit zum Senden bzw. Weiterleiten der Empfangsbestätigung gesetzt.

Eine Bitmaske mit beispielsweise 256 Bit (32 Byte) kann mit dem vorbeschriebenen Konzept somit die Absenderinformation von 256 Netzteilnehmern enthalten.

Von Vorteil bei einem solchen Konzept einer derartigen Kodierung der Absenderinformation ist, dass die Empfangsbestätigungen sämtlicher Netzteilnehmer unabhängig davon, wie umfangreich die Absenderinformation ist, gleich groß sind. Dies gilt auch für den Speicherbedarf bei Speicherung als Bitmaske. Damit wird ab einer bestimmten Anzahl an Kommunikationsendpunkten die Speicherung der Empfangsbestätigungen als Bitmaske weniger Speicher benötigen als die Speicherung der Empfangsbestätigungen als Tabelle. Auch dieses wirkt sich positiv auf eine reibungslose Empfangsbestätigungsübermittlung im Multi-Hop-Netz aus. Bei Netzen mit einer größeren Anzahl an Empfangsbestätigungen sendenden Netzteilnehmern kann die Größe einer solchen, eine Bitmaske verwendenden Empfangsbestätigungsnachricht reduziert werden, wenn durch eine geschickte Adressierung nur die Information gesendet wird, zu denen ein Empfangsbestätigungssignal tatsächlich im Adressspeicher zuvor abgelegt worden ist. Eine solche Komprimierung der Bitmaske kann beispielsweise durch Lauflängen-Codierung erreicht werden. Dieses verringert nicht nur die Größe einer Empfangsbestätigung sondern zusätzlich die Netzlast und zudem eine Paketverlustwahrscheinlichkeit. Gemäß einer ergänzenden oder alternativen Ausgestaltung ist vorgesehen, die Bitmaske in mehrere Segmente aufzuteilen, sodass nur solche Segmente im Rahmen des Sendens einer Empfangsbestätigung übertragen werden, die in zumindest einem Bit eine "eins" enthalten, wobei bei diesen Ausführungen eine "eins" die Information dafür ist, dass dieser Netzteilnehmer von dem diesem Bit zugeordneten Netzteilnehmer eine Empfangsbestätigung bereits erhalten hat.

Eine weitere alternative Ausgestaltung ist die Kombination aus Listen von Adressinformation und Bitmaps. Die Liste der Adressinformation wird mit der Nachricht verschickt, solange dieses weniger Speicher als die Variante mit Bitmaps in Anspruch nimmt. Erst bei Überschreiten des Speicherbedarfs von Bitmaps, wird die Information in Form von Bitmaps übertragen.

Wann immer die gesamte Absenderinformation trotz des gewählten Kompressionsverfahrens bzw. der möglichen Speichervariante nicht in einer einzigen Nachricht versendet werden kann, wird bei Ablauf des Timers die Absenderinformation in mehreren unmittelbar aufeinander folgenden Nachrichten versendet.

Das beschriebene Verfahren eignet sich vor allem zum Einsatz in infrastrukturlosen Netzen. Durchaus möglich ist eine Ausgestaltung auch, bei der in dem Multi-Hop-Netz hierarchische Strukturen implementiert sind, beispielsweise indem zumindest ein Netzteilnehmer als Clusterhead eingerichtet ist, der die Mitglieder seines Clusters organisiert. Bei einer solchen Ausgestaltung sendet der als Clusterhead eingerichtete Netzteilnehmer eine Empfangsbestätigung erst, wenn er von seinen Cluster-Mitgliedern eine Bestätigung über den Erhalt der Broadcast- oder Multicast-Kommunikation erhalten hat. Realisiert werden kann dieses dadurch, dass der Timer, nach dessen Ablauf die Empfangsbestätigung des Clusterheads gesendet wird, erst gestartet wird, wenn der Clusterhead die Empfangsbestätigung seiner Cluster-Mitglieder erhalten hat. Zudem kann der Clusterhead als Koordinator fungieren und die Empfangsbestätigungen der Cluster-Mitglieder der Reihe nach abfragen oder im Vorhinein eine Sendereihenfolge festlegen.

Da durch das beschriebene Verfahren die Anzahl der im Netz zu übertragenden Datenpakete im Rahmen einer Empfangsbestätigung durch die durch eine Kommunikation angesprochenen Netzteilnehmer signifikant reduziert ist, kann die diesbezüglich frei gewordene Übertragungskapazität im Netz für andere Zwecke genutzt werden. Bei diesen anderen Zwecken kann es sich beispielsweise auch um eine Reparatur in der Kommunikation des gesendeten Broadcast oder Multicast handeln.

Zur Überprüfung, ob eine Empfangsbestätigung von einem Netzteilnehmer korrekt gesendet worden ist, können die Eigenschaften der Netzteilnehmer im Rahmen eines Multi-Hop-Netzes genutzt werden. Eine solche Überprüfung ist möglich, da aufgrund der Kommunikation in einem solchen Netz die Nachbarn des eine Empfangsbestätigung sendenden Netzteilnehmers dieses wiederholen. Der die Empfangsbestätigung sendende Netzteilnehmer kann bis zum Erhalt eines solchen Echos warten. Bleibt dieses aus, ist die Empfangsbestätigung nicht korrekt gesendet und kann von diesem Netzteilnehmer nochmals gesendet werden.

In einer Weiterbildung ist vorgesehen, dass in dem Paket der Empfangsbestätigung diejenigen Netzteilnehmer vermerkt werden, die dieses Paket im Zuge der Weitergabe desselben bereits empfangen haben. Beim Empfangen eines solchen Paketes bei einem Netzteilnehmer werden die von diesem Paket zuvor besuchten Netzteilnehmer einschließlich der bei diesen vermerkten Absenderinformationen in den Empfangsbestätigungsspeicher übernommen. Jeder Netzteilnehmer kennt auf diese Weise somit bereits eine gewisse Anzahl an Netzteilnehmern, die dieses Paket mit Sicherheit erhalten haben. Auf diese Weise wird die Anfangsphase des Versendens von Empfangsbestätigungen deutlich verkürzt, da jeder Netzteilnehmer bereits eine bestimmte Menge von Bestätigungsinformationen hat und somit bereits die ersten gesendeten Empfangsbestätigungen mehrere Adressen enthalten.

Es ist aus unterschiedlichen Gründen immer wieder zu beobachten, dass ein Netzteilnehmer einen gesendeten Broadcast oder Multicast nicht erhält. Herkömmlich wird dieses erst erkannt, wenn der den Broadcast oder Multicast sendende Netzteilnehmer die erhaltenen Empfangsbestätigungen auswertet und in diesem Zuge feststellt, dass die Empfangsbestätigung eines oder mehrerer Netzteilnehmer fehlt. Dieser Netzteilnehmer wird dann den gesendeten Broadcast oder Multicast wiederholen, woran sich wiederum das Einsammeln der Empfangsbestätigungen sämtlicher angesprochener Netzteilnehmer anschließt. Entsprechend langwierig kann sich sodann die Ausführung eines gesendeten Broadcast- oder Multicast-Befehls gestalten.

Um diesbezüglich Abhilfe zu schaffen, ist in einer Weiterbildung vorgesehen, dass jeder Netzteilnehmer einen empfangenen Broadcast oder Multicast zwischenspeichert und dass ein Netzteilnehmer, der eine Empfangsbestätigung eines anderen Netzteilnehmers erhält, ohne vorher allerdings den zugehörigen Broadcast oder den Multicast erhalten zu haben, denjenigen Netzteilnehmer, von dem er die Empfangsbestätigung erhalten hat, bittet, ihm den Broadcast oder Multicast zu übermitteln. Dieses ist möglich, da durch die Empfangsbestätigungen der anderen Netzteilnehmer das Netz nicht überlastet ist. Der diesbezüglich angesprochene Netzteilnehmer übermittelt auf eine solche Anfrage hin den zuvor erhaltenen Broadcast oder Multicast an denjenigen Netzteilnehmer, der bei ihm um Übermittlung desselben angefragt hat. Somit handelt es sich bei dieser Verfahrensausgestaltung um eine Vor-Ort-Reparatur einer fehlerhaften Datenübertragung mit dem Ergebnis, dass ein solcher Ausbreitungsdefizit beim Broadcast oder Multicast unverzüglich über einen benachbarten Netzteilnehmer korrigiert wird, was wiederum die Datenpaketanzahl und somit die Last im Netz reduziert und sich vor allem sehr positiv auf eine besonders rasche Reaktionszeit im Netz auswirkt. Die vorbeschriebene Vor-Ort-Reparatur einer fehlerhaften Datenübertragung kann mit denselben Vorteilen auch unabhängig von der beanspruchten Erfindung und somit grundsätzlich auch in herkömmlich betriebenen Multi-Hop-Netzen eingesetzt werden.

Nachfolgend ist die Erfindung anhand eines Ausführungsbeispiels unter Bezugnahme auf die beigefügten Figuren beschrieben. Es zeigen:
- **Fig. 1:**: in einer schematisierten Darstellung ein Ausschnitt eines Multi-Hop-Netzes mit der symbolisiert in dem Cache des jeweiligen Netzteilnehmers abgelegten Absenderinformation vor bzw. beim Empfang eines Broadcast,
- **Fig. 2:**: der Ausschnitt des Multi-Hop-Netzes der Figur 1 mit der in dem jeweiligen Cache des Netzteilnehmers abgelegten Absenderinformation, nachdem ein erster Netzteilnehmer eine Empfangsbestätigung gesendet hat,
- **Fig. 3:**: das Multi-Hop-Netz der Figur 2 mit der in dem Cache jedes Netzteilnehmers abgelegten Absenderinformation, nachdem ein zweiter Netzteilnehmer seine Empfangsbestätigung gesendet hat,
- **Fig. 4:**: das Multi-Hop-Netz der Figur 3, nachdem noch ein weiterer Netzteilnehmer seine Empfangsbestätigung gesendet hat und
- **Fig. 5a-5f:**: eine Abfolge zeitlicher Ablaufdiagramme zur Erläuterung der Funktionsweise des erfindungsgemäßen Verfahrens in einem vereinfacht dargestellten Multi-Hop-Netz.

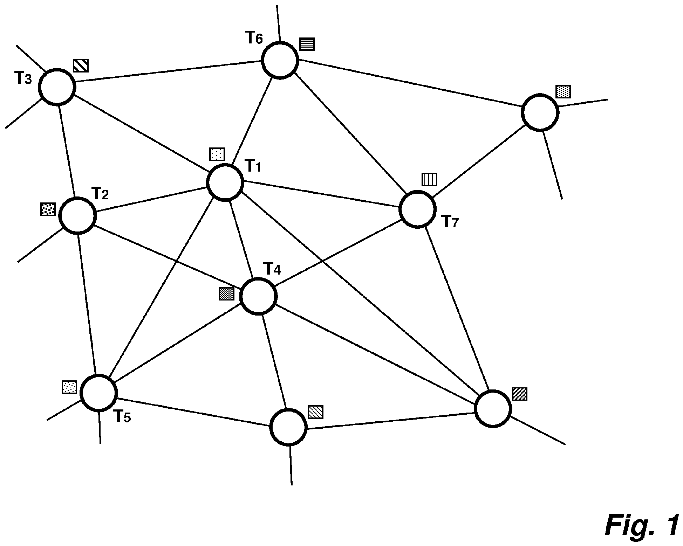

Ein Multi-Hop-Netz umfasst eine Vielzahl an Netzteilnehmern, von denen einige wenige des insgesamt sehr viel größeren Netzes in Figur 1 als Kreise dargestellt sind. Die Verbindungslinien, mit denen die Netzteilnehmer miteinander verbunden sind, stellen Kommunikationswege dar. Bei dem Multi-Hop-Netz handelt es sich um ein drahtloses Netz. Das Netz ist infrastrukturlos.

Im Folgenden ist das erfindungsgemäße Verfahren zum Einsammeln der Empfangsbestätigungen sämtlicher Netzteilnehmer des Multi-Hop-Netzes nach Senden eines Broadcast-Datenpaketes anhand des gezeigten Netzausschnittes erläutert. Nach Senden eines Broadcast von einem beliebigen Netzteilnehmer, der in Figur 1 nicht gezeigt ist, an alle weiteren Netzteilnehmer wird in jedem Netzteilnehmer ein Timer mit einer zufällig ausgewählten Verzögerungszeit gesetzt. Nach Ablauf der Verzögerungszeit sendet der jeweilige Netzteilnehmer eine Empfangsbestätigung. Läuft die Verzögerungszeit ohne Zwischenereignisse ab, das heißt: ohne, dass der Netzteilnehmer von einem seiner Nachbarn eine Empfangsbestätigung erhält, sendet dieser Netzteilnehmer seine Empfangsbestätigung an seine Nachbarn. Die Empfangsbestätigung beinhaltet die Absenderinformation des sendenden Netzteilnehmers. In Figur 1 ist die Ausgangssituation der Netzteilnehmer gezeigt, und zwar in Bezug auf die in dem jeweiligen Empfangsbestätigungsabsenderspeicher eines jeden Netzteilnehmers abgelegte Absenderinformation, die, wenn eine Empfangsbestätigung gesendet werden sollte, gesendet wird.

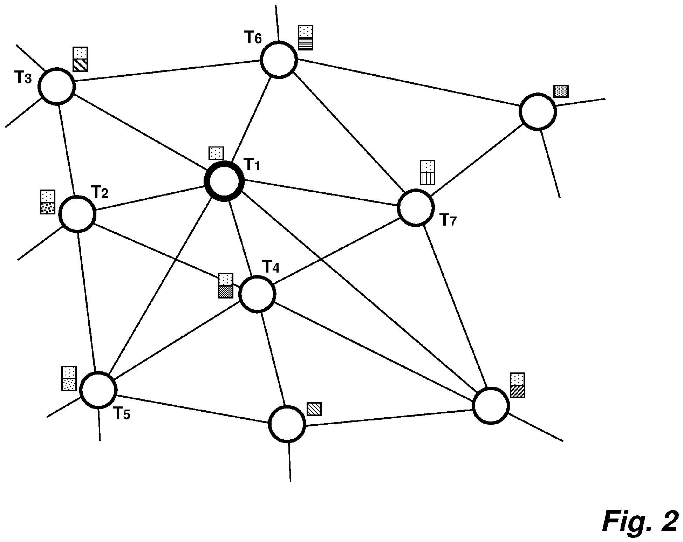

Empfängt ein Netzteilnehmer eine Empfangsbestätigung während laufender Verzögerungszeit, übernimmt der die Empfangsbestätigung empfangende Netzteilnehmer die darin enthaltene Absenderinformation und legt diese in seinem Empfangsbestätigungsabsenderspeicher ab, jedoch nur in einem solchen Umfang, soweit die empfangene Absenderinformation noch nicht in dem Empfangsbestätigungsabsenderspeicher des die Empfangsbestätigung empfangenden Netzteilnehmers enthalten ist. Bei dem in den Figuren dargestellten Ausführungsbeispiel hat der Teilnehmer T₁ als erster der gezeigten Netzteilnehmer eine Empfangsbestätigung an seine Nachbarn gesendet, so dass diese nunmehr in ihrem Empfangsbestätigungsabsenderspeicher neben der eigenen Absenderinformation diejenige des Netzteilnehmers T₁ enthalten. Diese Situation ist in Figur 2 gezeigt. Der sendende Netzteilnehmer T₁ ist hervorgehoben dargestellt. Mit dem Empfang der Empfangsbestätigung des Teilnehmers T₁ durch seine Nachbarn wird bei diesen Netzteilnehmern eine neue zufällig gewählte Verzögerungszeit bis zum Senden der eigenen Empfangsbestätigung gesetzt.

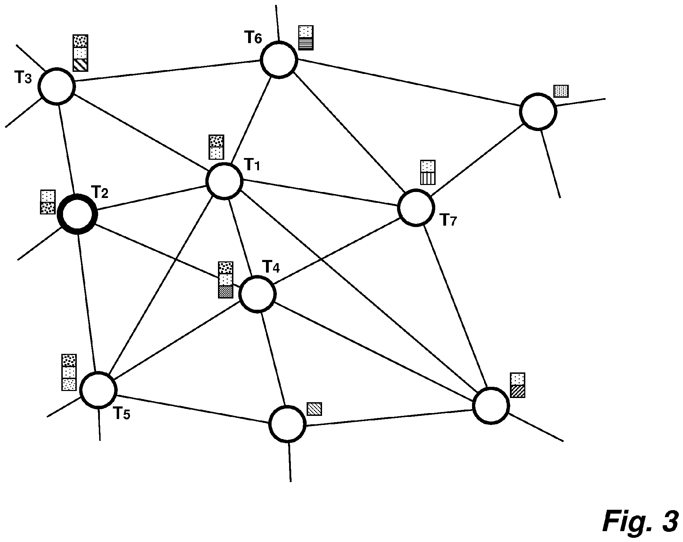

Bei dem Netzteilnehmer T₂ ist als nächstes der Verzögerungszeittimer abgelaufen, so dass dieser seine Empfangsbestätigung sendet, und zwar an alle seine Nachbarn. Die sich daraus ergebende Änderung in den Empfangsbestätigungsabsenderspeichern der Nachbarn des Netzteilnehmers T₂ ist in Figur 3 gezeigt. Diese Empfangsbestätigung empfängt auch der Netzteilnehmer T₁. Zu seiner eigenen im Empfangsbestätigungsabsenderspeicher verbliebenen Absenderinformation fügt dieser diejenige des Teilnehmers T₂ hinzu. Die übrigen Nachbarn des Netzteilnehmers T₂ - die Teilnehmer T₃, T₄ und T₅ - empfangen die Empfangsbestätigung des Netzteilnehmers T₂ gleichermaßen und kumulieren die darin enthaltene Absenderinformation mit der bereits in ihren eigenen Empfangsbestätigungsabsenderspeicher enthaltenen. Das sich ergebende Bild in Bezug auf die in den jeweiligen Empfangsbestätigungsabsenderspeichern der durch Senden der Empfangsbestätigung des Netzteilnehmers T₂ betroffenen Netzteilnehmer T₁,T₃,T₄,T₅ ist in Figur 3 gezeigt. Der Netzteilnehmer T₂, der diese Empfangsbestätigung gesendet hat, ist wiederum hervorgehoben gezeigt.

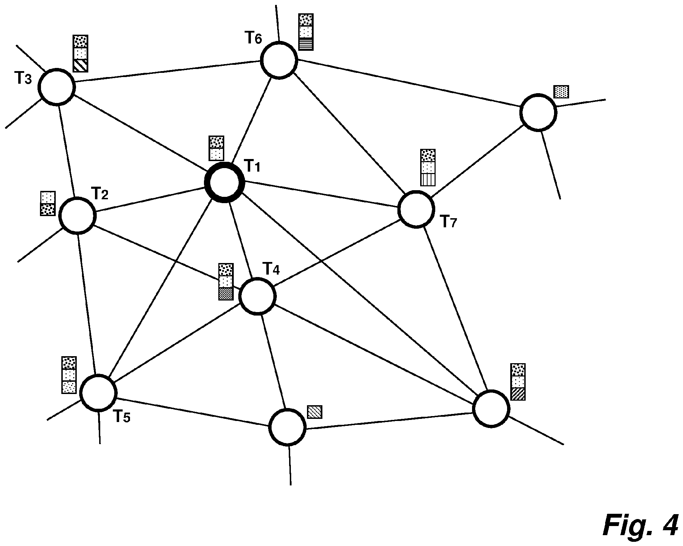

Mit dem Empfang der Empfangsbestätigung des Netzteilnehmers T₂ wird bei den diese Bestätigung empfangenden Nachbarn T₁,T₃,T₄ und T₅ erneut jeweils eine zufällig gewählte Verzögerungszeit gesetzt. Sollte bei dem Netzteilnehmer T₁ die Verzögerungszeit als erstes ablaufen, sendet dieser erneut eine Empfangsbestätigung an seine Nachbarn. Der Netzteilnehmer T₁ ist aus diesem Grunde hervorgehoben dargestellt. Seine Empfangsbestätigung enthält die eigene Absenderinformation sowie diejenige des Netzteilnehmers T₂. Da diese Absenderinformation bei den von der Empfangsbestätigung des Netzteilnehmers T₁ angesprochenen Nachbarn T₂,T₃ und T₄ bereits bekannt ist, wird von diesen Netzteilnehmern T₂, T₃, T₄ die in ihren Empfangsbestätigungsabsenderspeichern abgelegte Absenderinformation nicht geändert und es wird somit auch kein neuer Verzögerungstimer gesetzt. Dieses geschieht nur in denjenigen Netzteilnehmern, in denen mit dem Empfang der Empfangsbestätigung des Netzteilnehmers T₁ neue Absenderinformation erhalten wird, wie dieses bei den Netzteilnehmern T₆ und T₇ der Fall ist. Aus diesem Grunde wird bei diesen Netzteilnehmern T₆, T₇ der Verzögerungszeittimer mit einer erneuten zufällig ausgewählten Verzögerungszeit gesetzt. Die Belegung der jeweiligen Empfangsbestätigungsabsenderspeicher nach Senden der zweiten Empfangsbestätigung des Netzteilnehmers T₁ ist in Figur 4 gezeigt. Die Verfahrensschritte setzen sich sukzessive fort mit dem Ergebnis, dass die Absenderinformation in den Empfangsbestätigungen zunehmend anwächst bzw. akkumuliert.

Bereits diese erste Beschreibung des beanspruchten Verfahrens macht deutlich, dass Empfangsbestätigungen nicht wie herkömmlich ungefiltert weitergegeben werden, sondern dass eine empfangene Empfangsbestätigung nur dann weiterverarbeitet wird, wenn durch diese der empfangene Netzteilnehmer zumindest eine neue Absenderinformation mit dem Empfang der jeweiligen Empfangsbestätigung erhält. Am Beispiel des Absetzens der zweiten Empfangsbestätigung durch den Netzteilnehmer T₁ lässt sich dieses erkennen: Die übermittelte Absenderinformation wird nur von denjenigen Netzteilnehmern weiterverarbeitet und in die eigene bislang aggregierte Absenderinformation integriert, für die zumindest ein Teil der in dieser Empfangsbestätigung enthaltenen Absenderinformation noch unbekannt war. Daher wird bei dem dargestellten Ausführungsbeispiel diese Empfangsbestätigung nur durch die Netzteilnehmer T₆ und T₇, nicht jedoch durch die Netzteilnehmer T₂, T₃, und T₄ weiter ver- oder bearbeitet.

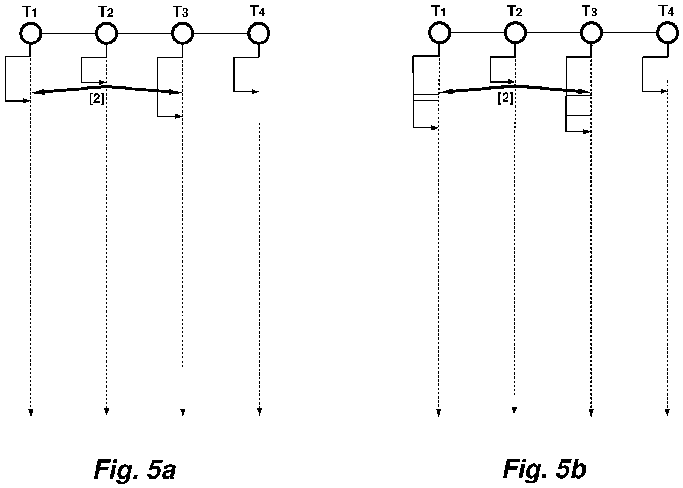

In der Figurenfolge der Figur 5a bis 5f ist der vorbeschriebene Ablauf in einem Multi-Hop-Netz mit nur vier Netzteilnehmern in einer zeitlichen Abfolge als *Message-Sequence-Chart* gezeigt. Die Netzteilnehmer sind auch in der Figurenfolge 5a bis 5f mit T₁, T₂, T₃, und T₄ bezeichnet. Jeder Netzteilnehmer T₁ - T₄ kann zur Vereinfachung der Darstellung nur mit seinem direkten Nachbarn kommunizieren. Die Zeitachse verläuft in den einzelnen Figuren 5a-5f ausgehend von dem jeweiligen Teilnehmer T₁ - T₄ nach unten und ist gestrichelt dargestellt. Der jeweilige Zeitfortschritt ist durch durchgehende Strichführung kenntlich gemacht.

Die Netzteilnehmer T₁ bis T₄ haben ein Broadcast-Paket erhalten. Mit dem Empfang wird in jedem Netzteilnehmer T₁ bis T₄ ein Timer für eine zufällig gewählte Verzögerungszeit gesetzt. Die Timer sind in dieser Figurenfolge durch von dem Zeitstrahl nach links gerichtete Ausbauchungen kenntlich gemacht. Figur 5a zeigt diese Situation und die Unterschiede in den zufällig gewählten Verzögerungszeiten der einzelnen Teilnehmer T₁ bis T₄. Mit Ablauf des dem Netzteilnehmer T₂ zugehörigen Timers, der die kürzeste Verzögerungszeit gesetzt hat, sendet dieser eine Empfangsbestätigung mit der Absenderinformation [2] an seine beiden Nachbarn T₁, T₃ (siehe Figur 5a). Mit dem Empfang dieser Empfangsbestätigung durch die Netzteilnehmer T₁, T₃ wird bei diesen ein Timer-Reset durchgeführt, mithin eine neue zufällig gewählte Verzögerungszeit gestartet. Zugleich wird die in der Empfangsbestätigung des Netzteilnehmers T₂ enthaltene Absenderinformation [2] der eigenen Absenderinformation [1] bzw. [3] in dem jeweiligen Empfangsbestätigungsabsenderspeicher hinzugefügt. Diese Situation zeigt Figur 5b.

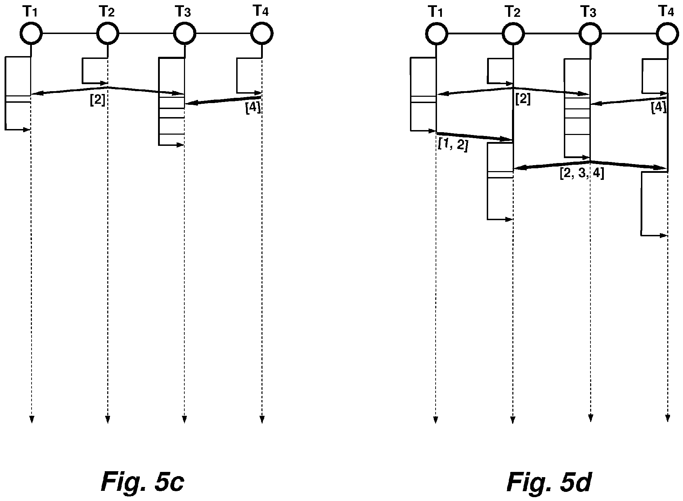

Kurz nachdem der Netzteilnehmer T₂ seine Empfangsbestätigung gesendet hat, sendet der Netzteilnehmer T₄, da seine zufällig gewählte Verzögerungszeit abgelaufen ist, seine Empfangsbestätigung mit der Absenderinformation [4] an seinen einzigen Nachbarn, den Netzteilnehmer T₃. Durch den Erhalt dieser Empfangsbestätigung wird in dem Netzteilnehmer T₃ erneut eine neue zufällig gewählte Verzögerungszeit gesetzt und es wird die neu empfangene Absenderinformation [4] der bereits vorhandenen Absenderinformation [2, 3] hinzugefügt, sodass in dessen Empfangsbestätigungsabsenderspeicher nunmehr die Absenderinformation [2, 3, 4] abgelegt ist. Visualisiert ist dieses in Figur 5c.

Als nächstes läuft die Verzögerungszeit in dem Netzteilnehmer T₁ ab, der sodann eine Empfangsbestätigung mit der Absenderinformation [1, 2] an seinen Nachbarn T₂ sendet. Dieser setzt erneut eine zufällig gewählte Verzögerungszeit und übernimmt in seinen Empfangsbestätigungsabsenderspeicher die empfangene Absenderinformation [1, 2]. Kurz danach läuft die Verzögerungszeit bei dem dargestellten Ausführungsbeispiel beim Netzteilnehmer T₃ ab. Dieser sendet eine Empfangsbestätigung mit der Absenderinformation [2, 3, 4]. Empfangen wird diese Empfangsbestätigung von den Netzteilnehmern T₂, T₄, bei denen mit dem Empfang eine neue zufällig gewählte Verzögerungszeit gestartet wird, da beide Netzteilnehmer T₂, T₄ eine neue Absenderinformation mit dieser Empfangsbestätigung erhalten. Der Teilnehmer T₂ fügt die neu erhaltene Absenderinformation [3, 4] in die bereits vorhandene ein, so dass der Netzteilnehmer T₂ in seinem Empfangsbestätigungsabsenderspeicher nunmehr die Absenderinformation [1, 2, 3, 4] enthält. Entsprechendes vollzieht sich beim Netzteilnehmer T₄, in dessen Empfangsbestätigungsabsenderspeicher nunmehr die Absenderinformation [2, 3, 4] enthalten ist. Diese Situation ist in Figur 5d gezeigt.

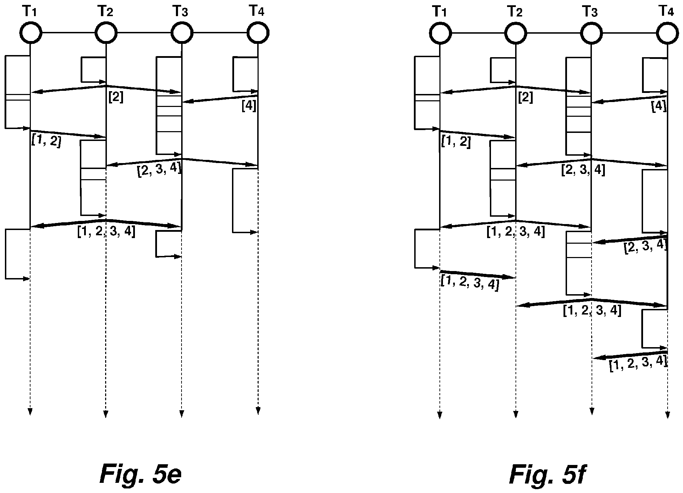

Die Verzögerungszeit des Netzteilnehmers T₂ läuft als nächstes ab, so dass dieser Netzteilnehmer T₂ eine Empfangsbestätigung mit der akkumulierten Absenderinformation [1, 2, 3, 4] sendet. Empfangen wird diese Empfangsbestätigung von den Netzteilnehmern T₁, T₃, die anschließend entsprechend reagieren und eine neue zufällig gewählte Verzögerungszeit setzen sowie die erhaltene Absenderinformation, soweit diese noch nicht bekannt war, in ihrem jeweiligen Empfangsbestätigungsabsenderspeicher ablegen. Zu diesem Zeitpunkt befindet sich in den Empfangsbestätigungsabsenderspeichern der Netzteilnehmer T₁, T₂ und T₃ dieselbe Absenderinformation [1, 2, 3, 4] (siehe Figur 5e).

Als nächstes läuft der Verzögerungszeittimer im Netzteilnehmer T₄ ab. Dessen Empfangsbestätigung enthält die Absenderinformation [2, 3, 4]. Diese ist im Zeitpunkt des Empfangs dieser Empfangsbestätigung dem diese Empfangsbestätigung empfangenden Netzteilnehmer T₃ bereits bekannt, so dass der Empfang dieser Empfangsbestätigung durch den Netzteilnehmer T₃ keine Aktion auslöst, wie dieses auch in der Darstellung der Figur 5f erkennbar ist.

Dasselbe vollzieht sich, wenn als nächstes am Netzteilnehmer T₁ der Verzögerungszeittimer abläuft und seine Empfangsbestätigung mit der Absenderinformation [1, 2, 3, 4] durch den Netzteilnehmer T₂ empfangen wird. Diese Absenderinformation ist dem Netzteilnehmer T₂ bereits bekannt. Daher wird eine Eintragung in seinem Empfangsbestätigungsabsenderspeicher nicht geändert und es wird auch kein neuer Verzögerungszeittimer gesetzt. Infolge des durch die gewählte Zufallszeit länger laufenden Timers bei dem Netzteilnehmer T₃ vollzieht sich selbiges. Auch dieser sendet sodann eine Empfangsbestätigung mit der Absenderinformation [1, 2, 3, 4]. Nur der Netzteilnehmer T₄ verarbeitet die für ihn darin enthaltene neue Absenderinformation, da er die Absenderinformation [1] noch nicht kannte. Dementsprechend wird diese in seinen Empfangsbestätigungsabsenderspeicher abgelegt und eine neue Verzögerungszeit gesetzt, mit deren Ablauf die Empfangsbestätigung mit der Absenderinformation [1, 2, 3, 4] gesendet wird (siehe Figur 5f).

Bereits an diesem vereinfachten Beispiel wird deutlich, dass die Anzahl der zu übermittelnden Empfangsbestätigungen mit für den jeweils angesprochenen Netzteilnehmer enthaltender Neuinformation (neue Absenderinformation) gegenüber der bei herkömmlichen Verfahren notwendigen Anzahl bereits erheblich reduziert werden konnte. Es versteht sich, dass sich bei komplexeren Netzen mit einer deutlich größeren Anzahl an Netzteilnehmern die in diesem vereinfachten Beispiel gezeigten Vorteile in der Reduzierung der Anzahl der zu übermittelnden Empfangsbestätigungen potenzieren.

Die vorstehend exemplarische Erläuterung des beanspruchten Verfahrens kann um eine Priorisierung in der Übermittlung größerer Datenpakete oder von Datenpaketen mit einer höheren Anzahl an Absenderinformation durchgeführt werden, wie dieses eingangs beschrieben ist. Dasselbe gilt für eine Vor-Ort-Reparatur eines nicht erhaltenen Broadcast- oder Multicastpaketes.

## Patentansprüche

1. Verfahren zum Übermitteln von Empfangsbestätigungen bei einer Broad- oder Multicast-Kommunikation in einem, insbesondere drahtlosen Multi-Hop-Netz, bei welchem Verfahren von jedem Netzteilnehmer nach Erhalt einer Broadcast-Kommunikation nach Ablauf einer pro Netzteilnehmer zufällig gewählten Verzögerungszeit eine Empfangsbestätigung, die zumindest die eigene Adressinformation enthält, gesendet wird, **dadurch gekennzeichnet,**
(a) **dass** jeder Netzteilnehmer während seiner laufenden, durch einen Timer kontrollierten Verzögerungszeit empfangene Empfangsbestätigungen anderer Netzteilnehmer daraufhin untersucht, ob darin eine Absenderinformation enthalten ist, die dieser Netzteilnehmer noch nicht erhalten hat, und wenn eine solche empfangene Empfangsbestätigung eine neue Absenderinformation enthält, die neue Absenderinformation in einem Empfangsbestätigungsabsenderspeicher abgelegt sowie die laufende Verzögerungszeit durch einen Timer-Reset vorzeitig beendet und eine neue zufällig gewählte Verzögerungszeit zum Senden der eigenen Empfangsbestätigung gestartet wird, wobei sich dieser Vorgang mit jeder während der aktuell laufenden Verzögerungszeit empfangenen Empfangsbestätigung eines anderen Netzteilnehmers wiederholt,
(b) **dass** mit Ablauf der aktuell laufenden Verzögerungszeit jeder Netzteilnehmer seine eigene Empfangsbestätigung sendet, die seine eigene Adressinformation und die in seinem Empfangsbestätigungsabsenderspeicher abgelegte Absenderinformation beinhaltet und
(c) **dass** eine neue zufällig ausgewählte Verzögerungszeit im Rahmen der aktuell laufenden Empfangsbestätigungsübermittlung für einen Netzwerkteilnehmer nur dann gesetzt und eine weitere Empfangsbestätigung gesendet wird, wenn nach dem Senden der ersten eigenen Empfangsbestätigung eine Empfangsbestätigung eines anderen Netzteilnehmers mit neuer Absenderinformation empfangen wird, wobei sich in einem solchen Falle die vorherigen Schritte (a) und (b) wiederholen.

2. Verfahren nach Anspruch 1, **dadurch gekennzeichnet, dass** die von einem Netzteilnehmer empfangene Absenderinformation in einem Empfangsbestätigungsabsenderspeicher abgelegt wird, der als Cache ausgelegt ist.

3. Verfahren nach Anspruch 1 oder 2, **dadurch gekennzeichnet, dass** die zufällig gewählte Verzögerungszeit, nach deren Ablauf eine Empfangsbestätigung gesendet wird, umso kürzer gewählt wird, je größer die Anzahl der im Empfangsbestätigungsabsenderspeicher abgelegten Absender ist.

4. Verfahren nach Anspruch 3, **dadurch gekennzeichnet, dass** die zufällig gewählte Verzögerungszeit durch Dividieren derselben durch die Anzahl der im Empfangsbestätigungsabsenderspeicher abgelegten Adressen geändert wird.

5. Verfahren nach einem der Ansprüche 1 bis 4, **dadurch gekennzeichnet, dass** ein Netzteilnehmer eine Empfangsbestätigung bereits vor Ablauf der laufenden Verzögerungszeit sendet, wenn die in seinem Empfangsbestätigungsabsenderspeicher abgelegten Absender eine vorbestimmte Anzahl erreicht hat.

6. Verfahren nach einem der Ansprüche 1 bis 4, **dadurch gekennzeichnet, dass** für die Absenderinformation jedes Netzteilnehmers eine Bitmaske verwendet wird, die hinreichend groß ist, um darin die Adressinformation aller Netzteilnehmer abzubilden.

7. Verfahren nach Anspruch 6, **dadurch gekennzeichnet, dass** die Bitmaske eine Länge aufweist, die der Anzahl der Netzteilnehmer des Multi-Hop-Netzes entspricht.

8. Verfahren nach einem der Ansprüche 1 bis 7, **dadurch gekennzeichnet, dass** das Multi-Hop-Netz zumindest in Teilen hierarchisch aufgebaut ist, indem ein oder mehrere Netzteilnehmer als Clusterhead eingerichtet sind, und dass deren Empfangsbestätigung die Empfangsbestätigung der von dem Clusterhead organisierten Cluster-Mitglieder umfasst.

9. Verfahren nach Anspruch 8, **dadurch gekennzeichnet, dass** der als Clusterhead eingerichtete Netzteilnehmer eine Empfangsbestätigung erst sendet, wenn er eine Empfangsbestätigung von den von ihm organisierten Cluster-Mitgliedern erhalten hat.

10. Verfahren nach einem der Ansprüche 1 bis 9, **dadurch gekennzeichnet, dass** jeder Netzteilnehmer einen empfangenden Broadcast oder Multicast zwischenspeichert und dass ein Netzteilnehmer, der eine Empfangsbestätigung eines anderen Netzteilnehmers erhält, ohne vorher den Broadcast oder den Multicast erhalten zu haben, an denjenigen Netzteilnehmer, von dem er die Empfangsbestätigung erhalten hat, einen Wiederholungsbefehl sendet, ihm den Broadcast oder Multicast zu übermitteln.

## Claims

1. Process of transmitting receipts in a broad- or multicast communication in a notably wireless Multi-Hop-network, in which process a receipt is sent by each participant after receipt of a broadcast communication after expiration of a delay time randomly chosen per participant, which receipt contains at least the own address information, **characterized by the fact**
(a) that each participant, during its running delay time which is controlled by a timer, checks received receipts from other participants to ascertain whether a sender information is contained which this participant has not yet received, and if such a received receipt contains a new sender information, this new sender information is stored in a sent-receipt memory and the running delay time is stopped prematurely by a timer reset and a new randomly chosen delay time for sending of the own receipt is started, wherein this process is repeated with each receipt of another participant received during the currently running delay time,
(b) that on expiration of the currently running delay time, each participant sends its own receipt containing its own address information and the address information stored in its sent-receipt memory and
(c) that during the currently running transmission of receipt a new randomly chosen delay time for a participant is set and a further receipt is sent only if after sending of the first own receipt a receipt of another participant with new address information is received, wherein in such a case the previous steps (a) and (b) are repeated.

2. Process in accordance with Claim 1, **characterized by the fact** that the sender information received by a participant is stored in a sent-receipt memory which is designed as cache.

3. Process in accordance with any of Claims 1 or 2, **characterized by the fact** that the randomly chosen delay time, after expiration of which a receipt is sent, is chosen the shorter, the larger the number of senders is in the sent-receipt memory.

4. Process in accordance with Claim 3, **characterized by the fact** that the randomly chosen delay time is changed by dividing it by the number of addresses stored in the sent-receipt memory.

5. Process in accordance with any of Claims 1 to 4, **characterized by the fact** that a participant sends a receipt already before expiration of the running delay time if the senders stored in its sent-receipt memory have reached a pre-destined number.

6. Process in accordance with any of Claims 1 to 4, **characterized by the fact** that for the sender information of each participant a bitmask is used which is of sufficient size to store the address information of all participants.

7. Process in accordance with Claim 6, **characterized by the fact** that the length of the bitmask corresponds to the number of participants in the Multi-Hop network.

8. Process in accordance with any of Claims 1 to 7, **characterized by the fact** that the Multi-Hop network has, at least in part, a hierarchic structure, in which one or several participants are designed as clusterhead and that their receipt contains the receipt of the cluster members organized by the clusterhead.

9. Process in accordance with Claim 8, **characterized by the fact** that the participant designed as clusterhead sends a receipt only after having received a receipt from the cluster members organized by itself.

10. Process in accordance with any of Claims 1 to 9, **characterized by the fact** that each participant buffers a broadcast or multicast received and that a participant receiving a receipt from another participant without having received the broadcast or the multicast beforehand, sends a repeat command to the participant from which he has received the receipt to send him the broadcast or multicast.

## Revendications

1. Procédé de transmission d'accusés de réception dans le cadre d'une communication broadcast ou multicast au sein d'un réseau en particulier sans fil multi-sauts, procédé dans lequel chaque participant au réseau envoie, après réception d'une communication broadcast, au bout d'une temporisation dont la durée est choisie de manière aléatoire pour chaque participant au réseau, un accusé de réception comportant au moins sa propre adresse, **caractérisé en ce que**
(a) chaque participant au réseau, pendant la durée de sa temporisation, contrôlée par un dispositif de programmation de durée, analyse les accusés de réception reçus d'autres participants au réseau afin de détecter si ceux-ci comportent une information relative à l'expéditeur que ce participant au réseau n'a pas encore reçue, et **en ce que**, si un tel accusé de réception reçu contient une nouvelle information relative à l'expéditeur, la nouvelle information relative à l'expéditeur est enregistrée dans une mémoire regroupant les expéditeurs d'accusés de réception, la temporisation en cours est arrêtée prématurément par une remise à zéro du dispositif de programmation de durée, et une nouvelle temporisation pour l'envoi de l'accusé de réception propre, choisie de manière aléatoire, est lancée, cette procédure se reproduisant pour chaque accusé de réception d'un autre participant au réseau reçu pendant la temporisation actuellement en cours,
(b) au bout de la temporisation actuellement en cours, chaque participant au réseau envoie son propre accusé de réception, comportant sa propre adresse et l'information expéditeur enregistrée dans sa mémoire d'expéditeurs d'accusés de réception, et
(c) une nouvelle temporisation choisie de manière aléatoire n'est fixée pour un participant au réseau dans le cadre de la transmission d'accusé de réception actuellement en cours et qu'un autre accusé de réception n'est envoyé que si, après l'envoi du premier accusé de réception propre, un accusé de réception d'un autre participant au réseau comportant une nouvelle information relative à l'expéditeur est reçue, les étapes précédentes (a) et (b) se répétant dans ce cas.

2. Procédé selon la revendication 1, **caractérisé en ce que** l'information relative à l'expéditeur reçue par un participant au réseau est enregistrée dans une mémoire regroupant les expéditeurs d'accusés de réception, conçue sous forme de cache.

3. Procédé selon l'une des revendications 1 ou 2, **caractérisé en ce que** la temporisation choisie de manière aléatoire, au bout de laquelle est envoyé un accusé de réception, est choisie d'autant plus courte que le nombre de expéditeurs enregistrés dans la mémoire regroupant les expéditeurs d'accusés de réception est grand.

4. Procédé selon la revendication 3, **caractérisé en ce que** la temporisation choisie de manière aléatoire est modifiée par division de celle-ci par le nombre des adresses enregistrées dans la mémoire regroupant les expéditeurs d'accusés de réception.

5. Procédé selon l'une des revendications 1 à 4, **caractérisé en ce que** un participant au réseau envoie un accusé de réception dès avant la fin de la temporisation actuellement en cours si les expéditeurs enregistrés dans sa mémoire regroupant les expéditeurs d'accusés de réception a atteint un nombre déterminé préalablement.

6. Procédé selon l'une des revendications 1 à 4, **caractérisé en ce que** est utilisé pour l'information expéditeur de chaque participant au réseau un masquage de taille suffisante pour y reproduire l'information adresse de tous les participants au réseau.

7. Procédé selon la revendication 6, **caractérisé en ce que** le masquage a une longueur correspondant au nombre des participants au réseau sans fil multi-sauts.

8. Procédé selon l'une des revendications 1 à 7, **caractérisé en ce que** le réseau sans fil multi-sauts est structuré au moins en partie de manière hiérarchique, un ou plusieurs participants au réseau étant configuré(s) à titre de tête de cluster, et **en ce que** leur accusé de réception inclut l'accusé de réception des membres du cluster organisés par la tête de cluster.

9. Procédé selon la revendication 8, **caractérisé en ce que** le participant au réseau configuré à titre de tête de cluster n'envoie un accusé de réception que s'il a reçu un accusé de réception des membres du cluster organisés par lui.

10. Procédé selon l'une des revendications 1 à 9, **caractérisé en ce que** chaque participant au réseau met en mémoire tampon un broadcast ou multicast récepteur, et **en ce que** un participant au réseau recevant un accusé de réception d'un autre participant au réseau sans avoir reçu au préalable le broadcast ou le multicast envoie au participant au réseau dont il a reçu l'accusé de réception un ordre de répétition de lui transmettre le broadcast ou le multicast.
